# EUROPÄISCHE PATENTSCHRIFT

(11) **EP 2 673 177 B1**
(45) Veröffentlichungstag und Bekanntmachung des Hinweises auf die Patenterteilung: **27.05.2015**
(21) Anmeldenummer: 11785599.9
(22) Anmeldetag: 18.11.2011
(51) Int. Cl.: B60T 10/02, F16D 57/04

(54) **HYDRODYNAMISCHER RETARDER**
HYDRODYNAMIC RETARDER
RETARDATEUR& xA;HYDRODYNAMIQUE

(30) Priorität: 07.02.2011 DE 102011010555
(43) Veröffentlichungstag der Anmeldung: 18.12.2013
(73) Patentinhaber: Voith Patent GmbH, 89522 Heidenheim (DE)
(72) Erfinder: JAEGER, Martin, 74597 Randenweiler (DE); FETZER, Friedrich, 91555 Feuchtwangen (DE); HUTH, Tilman, 74589 Satteldorf (DE)
(74) Vertreter: Dr. Weitzel & Partner
(86) Internationale Anmeldenummer: PCT/EP2011/005824
(87) Internationale Veröffentlichungsnummer: WO 2012/107062

(56) Entgegenhaltungen:
- DE-A1- 2 304 343
- GB-A- 1 365 670

## Beschreibung

Die vorliegende Erfindung betrifft einen hydrodynamischen Retarder, wie er als Dauerbremse in Kraftfahrzeugen, beispielsweise Bussen, Lastkraftwagen oder Schienenfahrzeugen eingesetzt wird.

Hydrodynamische Retarder weisen einen Arbeitsraum auf, der mit einem Arbeitsmedium befüllbar ist, um Drehmoment von einem angetriebenen Primärschaufelrad (Rotor) auf ein stationäres Sekundärschaufelrad, deshalb auch Stator genannt, hydrodynamisch zu übertragen. Anstelle eines stationären Sekundärschaufelrades kann auch ein entgegen dem Drehsinn des Primärschaufelrades umlaufendes Sekundärschaufelrad vorgesehen sein, um einen Gegenlaufretarder auszubilden. Durch Antreiben des Primärschaufelrads mittels einer abzubremsenden Welle, beispielsweise einer Getriebeausgangswelle oder einer indirekt mit den Antriebsrädern des Kraftfahrzeugs drehfest verbundenen Welle (Gelenkwelle), wird das Arbeitsmedium im Primärschaufelrads radial nach außen beschleunigt und tritt in das Sekundärschaufelrad ein, in welchem es radial nach innen strömend verzögert wird. Durch die derart ausgebildete Kreislaufströmung wird Drehmoment - hier als Bremsmoment des Retarders bezeichnet - vom Primärschaufelrads auf das Sekundärschaufelrad übertragen. Dabei wird das Primärschaufelrad verzögert und insbesondere die mit dem Primärschaufelrad drehfest ausgeführte Welle, verzögert.

Die Größe des übertragenen Bremsmomentes hängt dabei vom sogenannten Füllungsgrad des hydrodynamischen Retarders ab. Dabei unterscheidet man zwischen dem Zustand der Vollfüllung des Retarders, das heißt jenem Zustand, in welchem die maximal mögliche Arbeitsmediummenge im Arbeitsraum des Retarders zirkuliert, und dem entleerten Zustand des Retarders, das heißt jenem Zustand, in welchem sich kein Arbeitsmedium oder nur ein vorgegebener Rest von Arbeitsmedium im Arbeitsraum des hydrodynamischen Retarders befindet sowie dazwischen liegende Teilfüllungen. Mit zunehmendem Füllungsgrad, welcher das Verhältnis der tatsächlichen im Arbeitsraum zirkulierenden Arbeitsmediummenge gegenüber der maximal möglichen im Arbeitsraum zirkulierenden Arbeitsmediummenge (bei der Vollfüllung) beschreibt, steigt das vom Primärschaufelrads auf das Sekundärschaufelrad übertragene Drehmoment und somit das vom Retarder erzeugte Bremsmoment.

Die Einstellung eines bestimmten Füllungsgrades des Arbeitsraumes eines hydrodynamischen Retarders und damit die Steuerung des übertragenen Bremsmomentes kann entweder durch Aufbringen eines Steuerdruckes auf das dem Arbeitsraum zugeführte oder zuzuführende Arbeitsmedium oder durch eine Steuerung des Strömungsquerschnittes in einem Arbeitsmediumzulauf oder Arbeitsmediumablauf des hydrodynamischen Retarders mittels eines Regelventils, insbesondere Proportionalventils, ohne Aufbringen eines Steuerdruckes auf das *dem Arbeitsraum* zugeführte Arbeitsmedium erfolgen. Für letzteres kann der hydrodynamische Retarder beispielsweise im Kühlkreislauf des Fahrzeugs integriert sein. Die europäische Patentschrift EP 1 966 504 B1 beschreibt eine solche Regelung des Füllungsgrades mittels eines Proportionalventils.

Zum Aufbringen eines Steuerdruckes auf das Arbeitsmedium des hydrodynamischen Retarders ist es zum Beispiel bekannt, einen Vorratsraum für das Arbeitsmedium, insbesondere Öl, mit einer druckluftbeaufschlagten Membran vorzusehen. Die Membran trennt das Arbeitsmedium von einem Luftraum, der mittels eines Druckluftsystems, insbesondere Fahrzeugdruckluftsystems, beaufschlagt wird. Mittels eines pneumatischen Ventils kann der Luftdruck als Steuerdruck variiert werden und damit mehr oder weniger Arbeitsmedium aus dem Vorratsraum in den hydrodynamischen Kreislauf des Arbeitsmediums im Arbeitsraum gedrückt beziehungsweise verdrängt werden.

Weiterhin sind Verfahren zur Steuerung des Bremsmomentes bekannt geworden, bei welchem dem hydrodynamischen Retarder eine Kennlinie oder ein Kennfeld zugeordnet ist, welche/welches in Abhängigkeit des Fahrerwunsches nach einer bestimmten Verzögerung oder Erzeugung einer bestimmten Bremsleistung (Bremsmoment) jedem Betriebspunkt auf dieser Kennlinie oder in diesem Kennfeld einen entsprechenden Steuerdruck für das pneumatische Ventil zum Erzielen eines Bremsmomentes als Stellgröße zuordnet. Der Fahrer wählt hierbei mittels eines Wählhebels eine bestimmte Bremsstufe aus, die ein einzustellendes Retarderbremsmoment darstellt. Bei aktiviertem Retarder und Anforderung des Bremswunsches wird aus der Kennlinie oder aus dem Kennfeld der entsprechende Steuerdruck in Abhängigkeit eines oder mehrerer weiterer Parameter ermittelt und eingestellt, sodass sich ein bestimmter Füllungsgrad an Arbeitsmedium im Arbeitsraum einstellt, wodurch sich zwischen drehangetriebenem Primärschaufelrad und - im Falle des Gegenlaufretarders bei drehangetriebenem Sekundärschaufelrad - die besagte hydrodynamische Kreislaufströmung ausbildet.

Das Dokument WO 2006/037465 A1 beschreibt ein derartiges Verfahren. Der hydrodynamische Retarder umfasst ein Kennfeld, in dem als Parameter der Steuerdruck in Abhängigkeit des einzustellenden Retarderbremsmomentes und die Drehzahl des Primärschaufelrades hinterlegt sind.

Aufgrund von Guss- und Fertigungstoleranzen bei der Herstellung des Retarders unterliegen die sich tatsächlich einstellenden Bremsmomentverläufe bei vorbestimmten Steuerdruckwerten einer Streuung. Die "tatsächliche" Kennlinie weicht dabei teilweise von der im Steuergerät hinterlegten Kennlinie beziehungsweise Kennfeld ab. Diese Abweichung kann zu Komforteinbusen, insbesondere beim Bremsenblending, das heißt beim gezielten Überlagern von Bremsmomenten verschiedener Bremssysteme eines Fahrzeugs, beispielsweise der Motorbremse und des hydrodynamischen Retarders, führen.

Die nicht vorveröffentlichte DE 10 2010 026 274 beschreibt eine Bremsanlage mit einem hydrodynamischen Retarder mit einem dem Auslass nachgeschalteten Drosselventil, welches einen Ventilkörper umfasst, der mit Arbeitsmediumdruck aus dem Arbeitsraum des hydrodynamischen Retarders einerseits sowie dem Steuerdruck andererseits zu dessen Betätigung verschiebbar angeordnet ist, um die tatsächliche Kennlinie in Abhängigkeit des sich an beiden Flächen des Ventilkörpers einstellenden Druckes ständig zu verändern. GB1365670A beschreibt bewegliche strömungshindernde Bolzen zwischen Retarderstatorschaufeln.

Der vorliegenden Erfindung liegt die Aufgabe zugrunde, einen hydrodynamischen Retarder anzugeben, mit welchen eine exakte Einstellung des Bremsmomentes unabhängig von Fertigungstoleranzen zuverlässig erreicht werden kann. Insbesondere sollen die Abweichungen zwischen Ist-Bremsmomenten und Soll-Bremsmomenten ohne Nachbearbeitung der Bauteile bei Herstellung kompensiert werden können.

Die erfindungsgemäße Aufgabe wird durch einen hydrodynamischen Retarder gemäß dem unabhängigen Anspruch gelöst. Die abhängigen Ansprüche geben vorteilhafte und besonders zweckmäßige Ausgestaltungen der Erfindung an.

Der erfindungsgemäße hydrodynamische Retarder umfasst ein angetriebenes Primärschaufelrad und ein Sekundärschaufelrad, die miteinander einen torusförmigen, über einen Einlass mit Arbeitsmedium befüllbaren und über einen Auslass entleerbaren Arbeitsraum ausbilden, um Drehmoment hydrodynamisch vom Primärschaufelrad auf das Sekundärschaufelrad zu übertragen. Erfindungsgemäß ist eine Justiereinrichtung zur dauerhaften Einstellung des Strömungsquerschnitts für über den Auslass ausströmendes und/oder den Einlass einströmendes Arbeitsmedium des hydrodynamischen Retarders vorgesehen, umfassend einen manuell bewegbaren oder verformbaren Justierkörper, der den Strömungsquerschnitt für Arbeitsmedium aus dem Arbeitsraum und/oder in den Arbeitsraum einstellbar begrenzt, wobei der Justierkörper im Bereich des Auslasses oder in Strömungsrichtung des Arbeitsmediums gesehen zwischen dem Arbeitsraum und dem Auslass angeordnet ist und/oder im Bereich des Einlasses oder in Strömungsrichtung des Arbeitsmediums gesehen zwischen dem Einlass und dem Arbeitsraum angeordnet ist.

Mit Vorteil ist der durch den Justierkörper eingestellte Strömungsquerschnitt im Betrieb des hydrodynamischen Retarders konstant. Hierdurch wird erreicht, dass die Momentenkennlinie des hydrodynamischen Retarders bei einem vorgegebenen Füllungsgrad sowie einer vorgegebenen Primärschaufelraddrehzahl durch einmaliges Einstellen des Justierkörpers unabhängig von Fertigungstoleranzen stets gleich ist, ohne dass die Bauteile bei der Herstellung einer Nachbearbeitung bedürfen. Die manuelle Justiermöglichkeit ermöglicht ferner ein Nachjustieren der Kennlinie, beispielsweise nach einer vorgegebenen Betriebszeit.

*Vorteilhaft* umfasst der hydrodynamische Retarder ein Gehäuse, das zusammen mit einem der beiden Schaufelräder das andere Schaufelrad umschließt oder das beide Schaufelräder umschließt, wobei der Justierkörper zwischen einer ersten Stellung, in der er den Strömungsquerschnitt für Arbeitsmedium vollständig oder nahezu vollständig freigibt, und einer zweiten Stellung, in der er den Strömungsquerschnitt stärker, insbesondere vollständig oder nahezu vollständig verdeckt, im Gehäuse verschiebbar gelagert ist und in den beiden Stellungen oder in Zwischenstellung zwischen den beiden Stellungen mit dem Gehäuse lösbar fixierbar ist. Alternativ ist der Justierkörper in einem eigenen, insbesondere an das Retardergehäuse angeschlossenen Gehäuse der Justiereinrichtung gelagert.

Die Erfindung soll nun nachfolgend anhand der Figuren exemplarisch erläutert werden.

Es zeigen:
- Figur 1: eine schematische Darstellung einer Bremsanlage eines Kraftfahrzeugs mit einem hydrodynamischen Retarder;
- Figur 2: einen Ausschnitt aus einem in der Bremsanlage der Figur 1 angeordneten hydrodynamischen Retarders in einem Axialschnitt durch dessen Drehachse gemäß einer bevorzugten Ausführungsform.

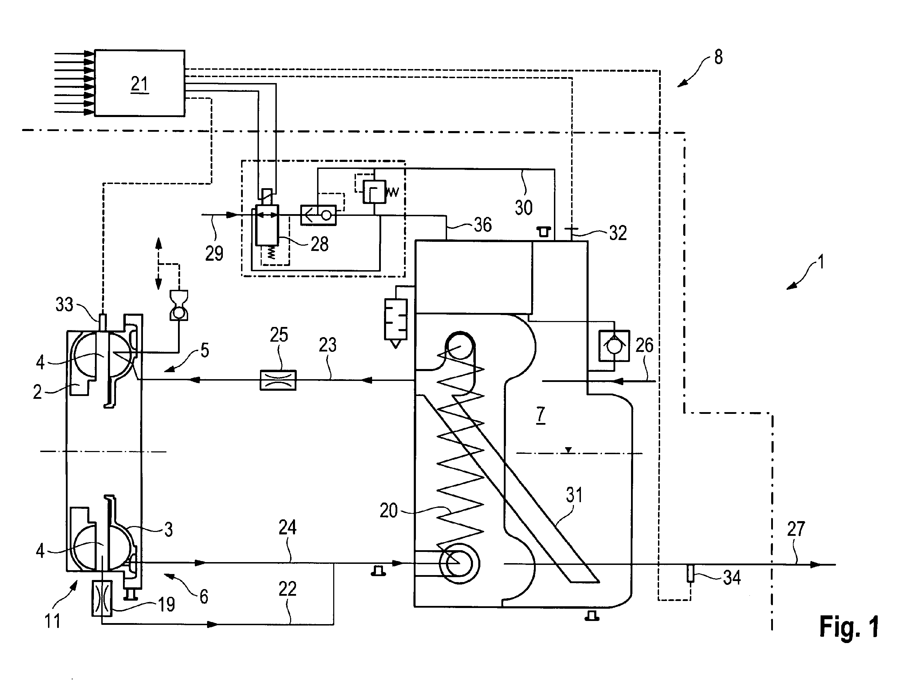

In der Figur 1 ist eine Bremsanlage eines Kraftfahrzeugs mit einem arbeitsmediumführenden externen Arbeitsmediumkreislauf 1 dargestellt. Im Arbeitsmediumkreislauf 1 sind vorliegend in Strömungsrichtung hintereinander folgende Komponenten angeordnet: ein hydrodynamischer Retarder 11, umfassend ein Primärschaufelrad 2 und ein Sekundärschaufelrad 3, die miteinander einen torusförmigen Arbeitsraum 4 ausbilden, die Mündung einer ersten Verbindungsleitung 22 zu einem Arbeitsmediumkühler 20, bei dem Arbeitsmedium Öl auch als Ölkühler bezeichnet, eine in der ersten Verbindungsleitung 22 angeordnete feststehende Drossel 19 konstanten Querschnitts, der Arbeitsmediumkühler 20, eine Mündung einer zweiten Verbindungsleitung 23 vom Arbeitsmediumkühler 20 zum Arbeitsraum 4 des hydrodynamischen Retarders 11 sowie eine weitere Drossel 25. Vorliegend mündet die zweite Verbindungsleitung 23 in einen Einlass 5, über den der Arbeitsraum 4 mit Arbeitsmedium aus der ersten Verbindungsleitung 23 des externen Arbeitsmediumkreislaufs 1 befüllbar ist. Über einen Auslass 6, in den die erste Verbindungsleitung 22 mündet, wird das Arbeitsmedium aus dem Arbeitsraum 4 wieder zurück in den externen Arbeitsmediumkreislauf 1 geleitet.

Im vorliegenden Fall ist der Arbeitsmediumkühler 20 in einem Vorratsraum 7 für Arbeitsmedium angeordnet und mit dem Vorratsraum 7 zu einer einzigen Baueinheit zusammengefasst. Dies muss jedoch nicht zwingend der Fall sein. So könnten Arbeitsmediumkühler 20 und Vorratsraum 7 separat vorgesehen sein. Ebenso könnte der hydrodynamische Retarder 11, der externe Arbeitsmediumkreislauf 1, und/oder der Arbeitsmediumkühler 20 und/oder der Vorratsraum 7 zu einer einzigen Baueinheit zusammengefasst sein. Der Arbeitsmediumkühler 20 ist zur Kühlung des Arbeitsmediums des hydrodynamischen Retarders 11 an einen Kühlmediumkreislauf des Kraftfahrzeugs (nicht gezeigt) angeschlossen, siehe die Zuleitung 26 für das Kühlmedium des Kühlkreislaufes und die Ableitung 27 für das Kühlmedium des Kühlkreislaufes.

Zur Einstellung eines bestimmten Füllungsgrades des Arbeitsraums 4 ist der Vorratsraum 7 zur Beaufschlagung des im Vorratsraum 7 enthaltenen Arbeitsmediums über eine strömungsleitende Verbindung mit dem Druckbeaufschlagungssystem 8 verbunden. Mittels einer insbesondere dem hydrodynamischen Retarder 11 zugeordneten Steuervorrichtung 21 wird in Abhängigkeit des einzustellenden Bremsmoments, beispielsweise einer mittels eines Wählhebels ausgewählten Bremsstufe, ein entsprechender Überlagerungsdruck (Steuerdruck) berechnet. Der Steuerdruck wird mittels des Druckbeaufschlagungssystems 8 dadurch eingestellt, dass die Steuervorrichtung 21 ein Magnetventil 28 in einer Druckluftleitung 29, in welcher Druckluft aus dem Fahrzeugdruckluftsystem (nicht gezeigt) ansteht, mehr oder minder öffnet. Das Magnetventil 28 stellt in Abhängigkeit seines Öffnungsquerschnittes den Steuerdruck (Luftdruck) in der Arbeitsleitung 30 ein. Die Arbeitsleitung 30 beaufschlagt einerseits das im Vorratsraum 7 enthaltene Arbeitsmedium mit dem Steuerdruck, um dieses in Abhängigkeit des Steuerdruckes mehr oder minder aus dem Vorratsraum 7 in den externen Arbeitsmediumkreislauf 1 und damit den Arbeitsraum 4 des Retarders 11 zu verdrängen. Vorliegend ist hierzu ein unterhalb des Arbeitsmediumspiegels im Vorratsraum 7 mündender Kanal 31 vorgesehen, der mit seinem entgegengesetzten Ende im Bereich des Arbeitsmediumauslasses des Arbeitsmediumkühlers 20 positioniert ist und so eine Verbindung zwischen dem Arbeitsmediumauslass des Arbeitsmediumkühlers 20 und dem Vorratsraum 7 herstellt.

Wenn hingegen der Steuerdruck im Vorratsraum 7, welcher das Arbeitsmedium im Vorratsraum 7 druckbeaufschlagt, vermindert wird, indem der Druck in der Arbeitsleitung 30 durch Reduzieren des Öffnungsquerschnittes oder Schließen des Magnetventils 28 vermindert wird, wobei Druckluft als Steuerdruckmedium aus dem Vorratsraum 7 über die Eritlüftungsleitung 36 entweichen kann, kann Arbeitsmedium in entgegengesetzter Richtung durch den Kanal 31 strömen und somit vom im externen Arbeitsmediumkreislauf 1 zirkulierenden Anteil des Arbeitsmediums getrennt werden, was eine Reduzierung des Füllungsgrads des Arbeitraums 4 zur Folge hat.

In dem gezeigten Ausführungsbeispiel ist am Vorratsraum 7, hier im Bereich des Luftraumes mit dem Steuerdruck oberhalb des Arbeitsmediumspiegels, ein Drucksensor 32 vorgesehen, welcher den Druck im Vorratsraum 7 erfasst und an die Steuervorrichtung 21 weiterleitet. Zusätzlich ist am Retarder 11 ein Temperatursensor 33 für das Arbeitsmedium vorgesehen, über welchen der Steuervorrichtung 21 die Arbeitsmediumtemperatur mitgeteilt wird. Die Steuerung oder Regelung des Bremsmoments kann demnach in Abhängigkeit dieser Größen erfolgen. Selbstverständlich sind diese Sensoren nur als Option anzusehen, von denen auch nur einer oder gar keiner vorgesehen werden muss. Ferner ist es möglich, andere oder weitere Sensoren vorzusehen, wie beispielsweise einen Temperatursensor zur Erfassung der Kühlmediumtemperatur im Fahrzeugkühlkreislauf, hier mit 34 bezeichnet, sodass die Steuervorrichtung 21 das Retarderbremsmoment auch in Abhängigkeit der Kühlmediumtemperatur (Kühlwassertemperatur) des Fahrzeugkühlkreislaufes einstellen kann.

Zwischen dem Arbeitsmedium und dem oberhalb des Arbeitsmediumspiegels befindlichen Luftraum des Vorratsraums 7 kann eine Membrane (nicht gezeigt) zur Trennung des Arbeitsmediums von der Druckluft vorgesehen sein, welche von Druckluft oder einem anderen Fluid, insbesondere Gas, beaufschlagbar ist. Diese ist jedoch nicht zwingend notwendig. Weiterhin wäre es denkbar die beiden Drosseln 19, 25 als Drosseln mit einstellbarem Strömungsquerschnitt auszubilden.

Vorliegend mündet im Bereich des Auslasses 6 des Retarders 11 beziehungsweise des Arbeitsraumes 4 ein erstes Ende einer dritten Verbindungsleitung 24, wohingegen deren zweites Ende in der ersten Verbindungsleitung 22, hier in Strömungsrichtung des Arbeitsmediums gesehen hinter der Drossel 19 beziehungsweise vor dem Arbeitsmediumkühler 20 mündet. Wie man der Figur 1 entnehmen kann, mündet im vorliegenden Fall das erste Ende der dritten Verbindungsleitung 24 an einer anderen Stelle im Auslass 6 als das der ersten Verbindungsleitung 22. Selbstverständlich könnte für jede der beiden Verbindungsleitungen 22, 24 auch ein eigener Auslass im Retarder 11 vorgesehen sein. Betrachtet man die erste Verbindungsleitung 22 als Hauptzweig des externen Arbeitsmediumkreislaufs 1, so stellt die dritte Verbindungsleitung 24 vorliegend einen Nebenzweig beziehungsweise parallelen *Zweig desselben dar. Dies könnte* jedoch anders sein. So könnte die dritte Verbindungsleitung 24 mit ihren beiden Enden in der ersten Verbindungsleitung 22, jeweils in Strömungsrichtung vor beziehungsweise hinter der Drossel 19 münden. Der Strömungsquerschnitt, der zum Ausströmen für Arbeitsmedium aus dem Arbeitsraum 4 zur Verfügung steht, wird demnach zusammen durch den Strömungsquerschnitt der ersten Verbindungsleitung 22 beziehungsweise der darin vorgesehenen Drossel 19 und der dritten Verbindungsleitung 24 gebildet.

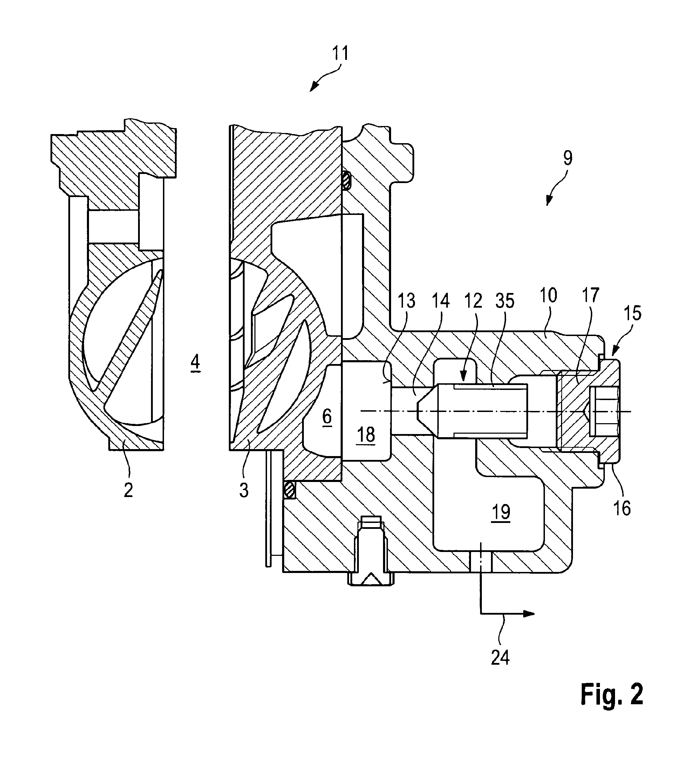

In der Figur 2 ist eine bevorzugte Ausführungsform des hydrodynamischen Retarders 11 aus der Figur 1 in einem Axialschnitt durch dessen Drehachse dargestellt. Dabei sind sich entsprechende Bauteile mit denselben Bezugszeichen wie in der Figur 1 versehen. Vorliegend ist im Bereich des Auslasses 6 eine Justiereinrichtung 9 zur dauerhaften Einstellung des Strömungsquerschnitts für über den Auslass 6 ausströmendes Arbeitsmedium angeordnet, umfassend einen Justierkörper 12. Der Justierkörper 12 weist vorliegend einen kreiszylindrischen Abschnitt auf, an den sich ein kegelstumpfförmiger Abschnitt anschließt. Natürlich wären auch andere Querschnittsformen denkbar. Der Justierkörper 12 trägt auf seinem kreiszylindrischen Abschnitt ein Außengewinde 35, welches in einem komplementären Innengewinde eines Gehäuses 10 der Justiereinrichtung 9 drehbar gelagert ist. Das Gehäuse 10 kann Teil eines nicht näher dargestellten Retardergehäuses sein oder zusätzlich zu diesem, und insbesondere getragen von diesem, vorgesehen sein. Durch Verdrehen des Justierkörpers 12 um dessen Drehachse kann dieser in Axialrichtung relativ zu dem Gehäuse 10 verschoben werden.

In dem Gehäuse 10 ist vorliegend ein Auffangraum 18 vorgesehen, welcher über den Auslass 6 mit dem Arbeitsraum 4 zur Abfuhr von Arbeitsmedium aus Letzterem strömungsleitend verbunden ist. Ferner ist ein Auslassraum 19 vorgesehen, welcher beispielsweise als zur Drehachse des hydrodynamischen Retarders 11 konzentrisch angeordneter Ringraum ausgeführt sein kann. Auffangraum 18 und Auslassraum 19 sind vorliegend über eine Gehäusewandung 13 des Gehäuses 10 gegeneinander abgegrenzt und über die Bohrung 14 miteinander strömungsleitend verbunden. Vorliegend mündet im Auslassraum 19 die in Figur 1 gezeigte Verbindungsleitung 24, um das aus dem Arbeitsraum 4 austretende Arbeitsmedium wieder dem Vorratsraum 7 (Figur 1) zuzuführen.

Zur Einstellung des Strömungsquerschnitts für das aus dem Auslass 6 ausströmende Arbeitsmedium wird der Strömungsquerschnitt für Arbeitsmedium durch die Bohrung 14 durch manuelles Verschieben des Justierkörpers 12 eingestellt. Letzterer ist zwischen einer ersten Stellung, in der er den Strömungsquerschnitt vollständig freigibt, und einer zweiten Stellung, in der er den Strömungsquerschnitt stärker verdeckt, in dem Gehäuse 10 durch Verdrehen verschiebbar gelagert. Dazu wird beim Bewegen des Justierkörpers 12 in Richtung auf den Auslass 6 (erste Stellung) vorliegend der Strömungsquerschnitt für Arbeitsmedium zwischen dem Auffangraum 18 und Auslassraum 19 vermindert, indem der durch die Innenwandung der Bohrung 14 und die Außenkontur des kegelstumpfförmigen Abschnitts des Justierkörpers 12 begrenzte Spalt vermindert wird. Umgekehrt wird dieser Spalt beim Bewegen des Justierkörpers 12 in Richtung weg vom Auslass 6 (auf die zweite Stellung hin) vergrößert. Die Justiereinrichtung 9 umfasst eine Sicherung 15, mittels der der Justierkörper 12 im Gehäuse 10 unverlierbar fixierbar ist. Dazu ist die Sicherung 15 vorliegend als Verschlussschraube 16 ausgeführt, dessen ein Gewinde aufweisender Abschnitt 17 in eine weitere Bohrung im Gehäuse 10 eingebracht ist, wobei die Bohrung und somit der Abschnitt 17 der Verschlussschraube 16 einen größeren Durchmesser als die Bohrung 14 aufweisen. Die Bohrung ist dabei konzentrisch zur Bohrung 14 angeordnet und verschließt das dem Auslass 6 abgewandte Ende der Bohrung 14 vorzugsweise dichtend gegen einen Austritt von Arbeitsmedium aus dem Gehäuse 10 und sichert den Justierkörper 12 gleichzeitig gegen Herausfallen. Natürlich wäre es denkbar, dass der das Gewinde tragende Abschnitt 17 der Verschlussschraube 16 denselben Außendurchmesser aufweist, wie der Justierkörper 12, sodass beide in der Bohrung 14 angeordnet sein könnten.

Durch den erfindungsgemäßen hydrodynamischen Retarder 11 mit der Justiereinrichtung 9 wird erreicht, dass der eingestellte Strömungsquerschnitt im Betrieb des hydrodynamischen Retarders 11 konstant bleibt. Etwaige bei der Herstellung des hydrodynamischen Retarders auftretende Fertigungstoleranzen werden durch einmaliges Einstellen des Strömungsquerschnitts für Arbeitsmedium (vor der ersten Inbetriebnahme des Retarders) über den Auslass 6 durch den Justierkörper 12 kompensiert, ohne dass eine Nachbearbeitung der insbesondere strömungsführenden Teile und eine gesonderte Kalibrierung der Steuerung bei der Inbetriebnahme des hydrodynamischen Retarders nötig ist.

Obwohl dies in den Figuren nicht gezeigt ist, könnten alternativ oder zusätzlich dieselben oben beschriebenen Maßnahmen für den Einlass 5 vorgesehen sein. In diesem Falle würde der Justierkörper 12 im Bereich des Einlasses, oder in Strömungsrichtung des Arbeitsmediums gesehen, vor oder hinter dem Einlass 5 angeordnet sein.

### Bezugszeichenliste

- 1: Arbeitsmediumkreislauf
- 2: Primärschaufelrad
- 3: Sekundärschaufelrad
- 4: Arbeitsraum
- 5: Einlass
- 6: Auslass
- 7: Vorratsraum
- 8: Druckbeaufschlagungssystem
- 9: Justiereinrichtung
- 10: Gehäuse
- 11: hydrodynamischer Retarder
- 12: Justierkörper
- 13: Gehäusewandung
- 14: Bohrung
- 15: Sicherung
- 16: Verschlussschraube
- 17: Abschnitt
- 18: Auffangraum
- 19: Auslassraum
- 20: Arbeitsmediumkühler
- 21: Steuervorrichtung
- 22, 23, 24: Verbindungsleitung
- 25: Drossel
- 26: Zuleitung für Kühlmedium
- 27: Ableitung für Kühlmedium
- 28: Magnetventil
- 29: Druckluftleitung
- 30: Arbeitsleitung
- 31: Kanal
- 32: Drucksensor
- 33: Temperatursensor
- 34: Temperatursensor
- 35: Außengewinde
- 36: Entlüftungsleitung

## Patentansprüche

1. Hydrodynamischer Retarder, umfassend
1.1 ein angetriebenes Primärschaufelrad (2) und ein Sekundärschaufelrad (3) die miteinander einen torusförmigen, über einen Einlass (5) mit Arbeitsmedium befüllbaren und über einen Auslass (6) entleerbaren Arbeitsraum (4) ausbilden, um Drehmoment hydrodynamisch vom Primärschaufelrad (2) auf das Sekundärschaufelrad (3) zu übertragen; **gekennzeichnet durch** die folgenden Merkmale:
1.2 mit einer Justiereinrichtung (9) zur dauerhaften variablen Einstellung des Strömungsquerschnitts für über den Auslass (6) ausströmendes und/oder den Einlass (5) einströmendes Arbeitsmedium des hydrodynamischen Retarders, umfassend
1.3 einen manuell bewegbaren oder verformbaren Justierkörper (12), der den Strömungsquerschnitt für Arbeitsmedium aus dem und/oder in den Arbeitsraum (4) einstellbar begrenzt; wobei
1.4 der Justierkörper (12) im Bereich des Auslasses (6) oder in Strömungsrichtung des Arbeitsmediums gesehen zwischen dem Arbeitsraum (4) und dem Auslass (6) angeordnet ist und/oder im Bereich des Einlasses (5) oder in Strömungsrichtung des Arbeitsmediums gesehen zwischen dem Einlass (5) und dem Arbeitsraum (4) angeordnet ist; wobei
1.5 der **durch** den Justierkörper (12) eingestellte Strömungsquerschnitt im Betrieb des hydrodynamischen Retarders konstant ist.

2. Hydrodynamischer Retarder gemäß Anspruch 1, **dadurch gekennzeichnet, dass** die Justiereinrichtung (9) ein Gehäuse (10) umfasst, und der Justierkörper (6.1) zwischen einer ersten Stellung, in der er den Strömungsquerschnitt für Arbeitsmedium vollständig oder nahezu vollständig freigibt und einer zweiten Stellung, in der er den Strömungsquerschnitt stärker, insbesondere vollständig oder nahezu vollständig verdeckt, im Gehäuse (10) verschiebbar gelagert ist und in den beiden Stellungen oder in Zwischenstellungen zwischen den beiden Stellungen mit dem Gehäuse (10) lösbar fixierbar ist.

3. Hydrodynamischer Retarder gemäß Anspruch 2, **dadurch gekennzeichnet, dass** der Justierkörper (12) über ein Außengewinde (35) in einer Bohrung (14) des Gehäuses (10) durch Verdrehung verschiebbar zwischen der ersten und zweiten Stellung gelagert ist.

4. Hydrodynamischer Retarder gemäß einem der Ansprüche 2 oder 3, **dadurch gekennzeichnet, dass** der Justierkörper (12) mittels einer Sicherung (15) im oder am Gehäuse (10) unverlierbar lösbar fixierbar ist.

5. Hydrodynamischer Retarder gemäß Anspruch 4, **dadurch gekennzeichnet, dass** die Sicherung (15) als Verschlussschraube (16) ausgeführt ist und deren das Gewinde aufweisender Abschnitt (17) konzentrisch zum Justierkörper (12) in die Bohrung (14) eingebracht ist; wobei
5.1 die Verschlussschraube (16) das dem Auslass (6) oder Einlass (5) abgewandte Ende der Bohrung (14), insbesondere dichtend gegen ein Austritt von Arbeitsmedium aus dem Gehäuse (10), verschließt und den Justierkörper (12) gegen Herausfallen sichert.

6. Hydrodynamischer Retarder gemäß einem der Ansprüche 3 bis 5, **dadurch gekennzeichnet, dass** der Arbeitsraum (4) strömungsleitend mit einem Auffangraum (18) verbunden ist, wobei der Auffangraum (18) über eine Gehäusewandung (13) des Gehäuses (10) gegen einen Auslassraum (19), der zum Ableiten von Arbeitsmedium strömungsleitend mit dem Auslass (6) verbunden ist, begrenzt ist; und
6.1 in der Gehäusewandung (13) die Bohrung (14) eingebracht ist.

## Claims

1. A hydrodynamic retarder, comprising
1.1 a driven primary blade wheel (2) and a secondary blade wheel (3), which form together a toroidal working chamber (6) which selectively can be filled with a working medium via an inlet (5) and can be drained via an outlet (6), to transfer torque hydrodynamically from the primary blade wheel (2) to the secondary blade wheel (3); **characterised by** the following features:
1.2 having an adjusting device (9) for permanent variable adjustment of the flow cross-section for working medium of the hydrodynamic retarder flowing out via the outlet (6) and/or flowing in via the inlet (5), including
1.3 a manually mobile or deformable adjusting body (12), which delineates in an adjustable fashion the flow cross-section for the working medium flowing out and/or into the working chamber (4); whereas
1.4 the adjusting body (12) is arranged in the region of the outlet (6) or as seen in the flow direction of the working medium between the working chamber (4) and the outlet (6) and/or is arranged in the region of the inlet (5) or as seen in the flow direction of the working medium between the inlet (5) and the working chamber (4); whereas
1.5 the flow cross-section adjusted through the adjusting body (12) is constant during operation of the hydrodynamic retarder.

2. A hydrodynamic retarder according to claim 1, **characterised in that** the adjusting device (9) includes a casing (10), and the adjusting body (6.1) is mounted to slide between a first position, in which it clears the flow cross-section for working medium completely or almost completely and a second position,
in which it covers the flow cross-section more strongly, in particular completely or almost completely, in the casing (10) and can be fixed to the casing (10) in a detachable manner in both positions or in intermediate positions between both positions.

3. A hydrodynamic retarder according to claim 2, **characterised in that** the adjusting body (12) is mounted to slide by rotation between the first and the second positions via an external thread (35) in a bore (14) of the casing (10).

4. A hydrodynamic retarder according to one of claims 2 or 3, **characterised in that** the adjusting body (12) can be fixed in a detachable manner by means of a safety device (15) in or on the casing (10) in a captive manner.

5. A hydrodynamic retarder according to claim 4, **characterised in that** the safety device (15) is designed as a locking screw (16) and whose threaded portion (17) is inserted into the bore (14) concentrically with respect to the adjusting body (12); whereas
5.1 the locking screw (16) seals the end of the bore (14) facing away from the outlet (6) or the inlet (5), in particular hermetically to prevent any leakage of working medium from the casing (10) and secures the adjusting body (12) against falling out.

6. A hydrodynamic retarder according to one of claims 3 to 5, **characterised in that** the working chamber (4) is connected to a collecting chamber (18) in a flow-guiding manner, whereas the collecting chamber (18) is delineated by a casing wall (13) of the casing (10) against an outlet chamber (19), which is connected to the outlet (6) in a flow-guiding manner for discharging working medium; and
6.1 the bore (14) is inserted into the casing wall (13).

## Revendications

1. Retardateur hydrodynamique, comprenant:
1.1 une roue à aubes primaire entraînée (2) et une roue à aubes secondaire (3) formant ensemble une chambre de travail (4) toroïdale, pouvant être remplie de fluide de travail à travers une entrée (5) et pouvant être vidée à travers une sortie (6), pour transmettre un couple de rotation de manière hydrodynamique de la roue à aubes primaire (2) à la roue à aubes secondaire (3);
présentant les caractéristiques suivantes:
1.2 un dispositif d'ajustement (9) permettant le réglage variable durable de la section d'écoulement pour le fluide de travail du retardateur hydrodynamique s'écoulant à travers la sortie (6) ou pénétrant par l'entrée (5), comprenant
1.3 un corps d'ajustement déplaçable ou déformable manuellement (12), qui limite de façon réglable la section d'écoulement pour le fluide de travail sortant de la chambre de travail (4) et/ou sortant de celle-ci ; où
1.4 le corps d'ajustement (12) est disposé dans la zone de sortie (6) ou dans le sens d'écoulement du fluide de travail, entre la chambre de travail (4) et la sortie (6) et/ou dans la zone d'entrée (5) ou dans le sens d'écoulement du fluide de travail, entre l'entrée (5) et la chambre de travail (4);
1.5 la section d'écoulement réglée par le corps d'ajustement (12) est constante dans la zone du retardateur hydrodynamique.

2. Retardateur hydrodynamique selon la revendication 1, **caractérisé en ce que** le dispositif d'ajustement (9) comporte un logement (10), et le corps d'ajustement (6.1.) est disposé de façon mobile entre une première position, dans laquelle il libère complètement ou presque complètement la section d'écoulement pour le fluide de travail et une seconde position, dans laquelle il recouvre plus fortement la section d'écoulement, en particulier entièrement ou presque entièrement, dans le logement (10) et peut être fixé de manière amovible avec ledit logement (10) dans les deux positions ou bien dans des positions intermédiaires entre les deux positions.

3. Retardateur hydrodynamique selon la revendication 2, **caractérisé en ce que** le corps d'ajustement (12) est disposé de façon mobile entre la première position et la seconde position, par rotation dans un alésage (14) du logement (10) par le biais d'un filet externe (35).

4. Retardateur hydrodynamique conformément à l'une des revendications 2 ou 3, **caractérisé en ce que** le corps d'ajustement (12) peut être fixé de manière amovible et imperdable à l'aide d'une sécurité (15) dans ou au niveau du logement (10).

5. Retardateur hydrodynamique selon la revendication 4, **caractérisé en ce que** la sécurité (15) est sous forme de vis de fermeture (16) et dont la section (17) présentant le filet est prévue de manière concentrique par rapport au corps d'ajustement (12) dans l'alésage (14) ; où
5.1 la vis de fermeture (16) ferme hermétiquement l'extrémité de l'alésage (14) opposée à la sortie (6) ou l'entrée (5), en particulier contre l'échappement de fluide de travail par rapport au logement (10) et empêche la chute du corps d'ajustement (12).

6. Retardateur hydrodynamique selon l'une des revendications 3 à 5, **caractérisé en ce que** la chambre de travail (4) est reliée à une chambre de récupération (18) en guidant l'écoulement où la chambre de récupération (18) est limitée par une paroi (13) du logement (10) contre une chambre de sortie (19), chambre reliée à la sortie (6) en guidant l'écoulement pour extraire le fluide de travail ; et
6.1 l'alésage (14) est pratiqué dans la paroi de logement (13).
